# EUROPEAN PATENT SPECIFICATION

(11) **EP 2 665 244 B1**
(45) Date of publication and mention of the grant of the patent: **23.08.2017**
(21) Application number: 13167235.4
(22) Date of filing: 10.05.2013
(51) Int. Cl.: H04W 8/24, G06F 3/14, H04M 1/725

(54) **Mobile network device and method of sharing screenshots and computer-readable medium thereof**
Mobile Netzwerkvorrichtung und Verfahren zum Teilen von Screenshots und computerlesbares Medium davon
Dispositif de réseau mobile et procédé pour partager des captures d'écran et support pouvant être lu par un ordinateur

(30) Priority: 15.05.2012 TW 101117197
(43) Date of publication of application: 20.11.2013
(73) Proprietor: Awind Inc., 235 New Taipei City (TW)
(72) Inventor: Chang, Kuo-Lung, 235 New Taipei City (TW); Chang, Cheng-Hsiung, 235 New Taipei City (TW); Hung, Meng-Chung, 235 New Taipei City (TW); Liu, Shih-Ping, 235 New Taipei City (TW); Chou, Kuan-Yu, 235 New Taipei City (TW); Wang, Hsing-Yung, 235 New Taipei City (TW)
(74) Representative: Viering, Jentschura & Partner mbB Patent- und Rechtsanwälte

(56) References cited:
- US-A1- 2006 079 214
- US-A1- 2010 070 842
- US-A1- 2010 328 469

## Description

### BACKGROUND OF THE INVENTION

### 1. FIELD OF THE INVENTION

The present invention relates to a mobile network device and method for sharing screenshots, and more particularly to a mobile network device and method for sharing screenshots, which can simplify the operation of sharing screenshots.

### 2. DESCRIPTION OF THE PRIOR ART

The popularization of mobile network devices, such as smart phones and tablet computers, has driven the diversification of the contents thereof. Thus, there are more and more chances to share screen frames of mobile network devices. For an example, the user can use a screenshot function of a mobile network device to shoot the mission-completed screen frame of a game and then uses communication software to transmit the shot screen frame to friends or others. For another example, a teacher may shoot specified screen frames of operating an application program and use them in instruction. However, the user cannot share screenshots with others or transmit screenshots to a computer, a television or a projector unless the user makes some extra operations, which are likely to inconvenience the user.

For example, in application program instruction, the teacher may need specified screen frames of operating the application program to make students understand easily. A conventional way to do it is storing the screenshots of the operation steps one by one or fabricating the screenshots into projection slides. Then, the teacher can use the screenshots to demonstrate the application program. However, such a way cannot instantly show specified screen frames of the operation of the application program to deal with unexpected situations, such as the questions asked by students during class. Another conventional way is: once a screenshot has been taken, the instructed application program is switched to another program for transmitting the taken screenshot to a display device; then, the instructed application program is restored again for taking the next screenshot. The repeated switches of the application program interrupt the continuity of instruction and affect the rhythm of instruction.

A method for showing wireless mobile device data content on an external viewer disclosed by US patent publication No. 2006/0079214 A1 discloses that the information data content is transferred from the mobile device to the external display device independent of the characteristics, data format and screen resolution of the external display device. However, in the above scenario, the repeated switches between the application program and the presentation program cannot be avoided.

Therefore, how to simplify the operation of sharing screenshots has become a problem the manufacturers are eager to solve.

### SUMMARY OF THE INVENTION

The object is solved by the subject matter of the independent claims. Preferred embodiments are defined in the dependent claims.

The present invention is directed to a sender device and method for sharing screenshots and a computer-readable medium thereof, wherein the sender side detects whether the user is taking screenshots, and wherein the sender side automatically retrieves the last taken screenshot by the user and transmits it to the receiver side, whereby is simplified the operation of sharing screenshots.

A first embodiment of the present invention proposes a sender device for sharing screenshots, which cooperates with a receiver device to form a screenshot sharing system. The sender device comprises a detection module, a control module and a wireless network interface. The detection module detects in the background whether the user is taking screenshots and outputs a corresponding trigger signal. The control module electrically connects with the detection module and retrieves a screenshot taken by the user latest according to the trigger signal output by the detection module. The wireless network interface electrically connects with the control module to establish a wireless network link with the receiver device and transmit the screenshot to the receiver device.

A second embodiment of the present invention proposes a method for sharing screenshots, which comprises steps: establishing a wireless network link between a sender device and a receiver device; the sender device detecting in the background whether the user is taking screenshots; if the user is taking screenshots, the sender device retrieving a screenshot taken by the user latest; if the user does not take any screenshot, the sender device keeping on detection; the sender device transmitting the taken screenshot to the receiver device; and the receiver device using an external or built-in display module to present the screenshot transmitted by the sender device.

A third embodiment of the present invention proposes a method for transmitting screenshots, which is applied to a sender device and comprises steps: establishing a wireless network link between a sender device and a receiver device; detecting in the background whether the user is taking screenshots; if yes, retrieving a last taken screenshot; if no, keeping on detection; and transmitting the taken screenshot to the receiver device.

A fourth embodiment of the present invention proposes a computer-readable medium, which stores a computer program that can be loaded into a sender device to execute a method for transmitting screenshots. The method for transmitting screenshots comprises steps: establishing a wireless network link between a sender device and a receiver device; detecting in the background whether the user is taking screenshots; if yes, retrieving a last taken screenshot; if no, keeping on detection; and transmitting the taken screenshot to the receiver device.

The objective, technologies, features and advantages of the present invention will become apparent from the following description in conjunction with the accompanying drawings wherein certain embodiments of the present invention are set forth by way of illustration and example.

### BRIEF DESCRIPTION OF THE DRAWINGS

The foregoing conceptions and their accompanying advantages of this invention will become more readily appreciated after being better understood by referring to the following detailed description, in conjunction with the accompanying drawings, wherein:
Fig. 1 is a diagram schematically illustrating a sender device for sharing screenshots according to one embodiment of the present invention;
Fig. 2 is a flowchart schematically illustrating a method for sharing screenshots according to one embodiment of the present invention; and
Fig. 3 is a flowchart schematically illustrating a method for transmitting screenshots according to one embodiment of the present invention.

### DESCRIPTION OF THE PREFERRED EMBODIMENT

The detailed explanation of the present invention is described as follows. The described preferred embodiments are presented for purposes of illustrations and description, and they are not intended to limit the scope of the present invention.

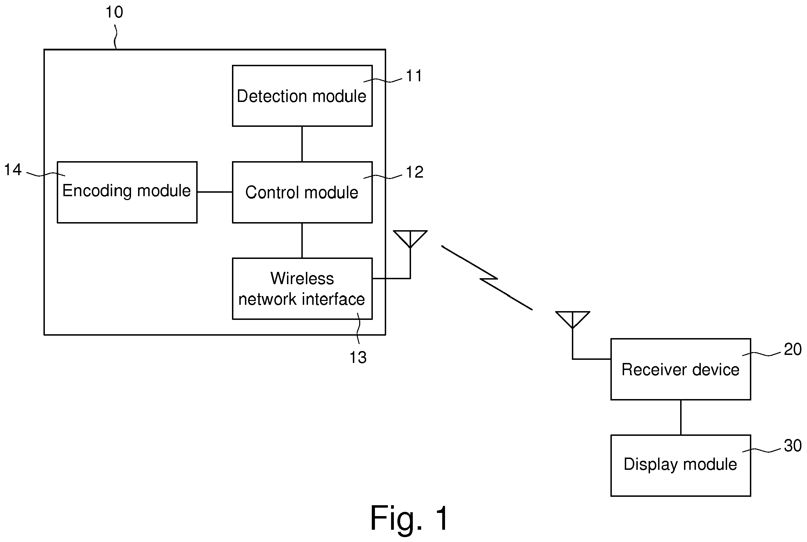

Refer to Fig.1 schematically showing a sender device for sharing screenshots according to one embodiment of the present invention. The sender device 10 cooperates with a receiver device 20 to form a screenshot sharing system. For example, the sender device 10 may be but is not limited to be a mobile network device, such as a smart phone or a tablet computer. The sender device 10 comprises a detection module 11, a control module 12 and a wireless network interface 13. The detection module 11 detects in the background whether the user is taking screenshots. If the user is taking screenshots, the detection module 11 outputs a corresponding trigger signal. The user can input an instruction whose contents depend on the operating system or software of the mobile network device to execute a screenshot activity. For example, in the background, the detection module 11 detects the input signal of HID (Human Interface Device), such as a touch screen or a button, to determine whether the user is executing a screenshot activity.

The control module 12 electrically connects with the detection module 11 and retrieves a screenshot taken by the user latest according to the trigger signal output by the detection module 11. For example, the screenshot taken by the user is stored in a storage path preset by the operating system or software of the mobile network device. The control module 12 retrieves the newest picture in the storage path as the latest-taken screenshot. The wireless network interface 13 electrically connects with the control module 12 for establishing a wireless network link with the receiver device 20. For example, the wireless network link works according to the IEEE 802.11-based communication standard. The control module 12 transmits the latest-taken screenshot to the receiver device 20 through the wireless network interface 13. The receiver device 20 uses an external or built-in display module 30 to present the screenshot transmitted by the sender device 10. For example, the receiver device 20 is a mobile network device whose built-in display unit can present the screenshot transmitted the sender device 10. Alternatively, the receiver device 20 connects with a display device (such as a computer display, a television or a projector) through a video connection interface (such as a VGA (Video Graphic Array) port, DVI (Digital Visual Interface), or HDMI (High Definition Multimedia Interface)) to present the screenshot transmitted by the sender device 10.

The screenshot is normally taken by the operating system through software. Therefore, the taken screenshot is free of distortion. Because of limitation of bandwidth or in order to reduce the occupied bandwidth, the screenshot may be encoded to reduce the data volume before transmission. In one embodiment, the sender device for sharing screenshots further comprises an encoding module 14, which electrically connects with the control module 12 and encodes the screenshot retrieved by the control module 12 to reduce the data volume.

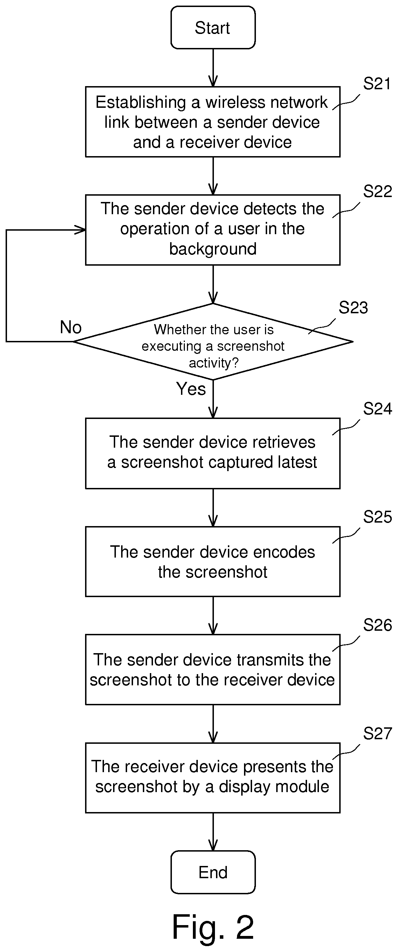

Below is described a method for sharing screenshots according to one embodiment of the present invention. Refer to Fig.1 and Fig.2. Firstly, a wireless network link is established between a sender device 10 and a receiver device 20 (Step S21). For example, the receiver device 20 enables a software- or hardware-based network connection module beforehand; the sender device 10 scans the receivers 20 within the communication range and selects appropriate receiver devices 20 to establish wireless network links therebetween. Alternatively, the sender device 10 enables a network connection module beforehand; and then the receiver devices 20 actively establish wireless network interfaces with the sender device 10. Next, the sender device 10 detects the operations of the user in the background (Step S22) and identifies whether the user is taking screenshots (Step S23). If the user does not take any screenshot, the sender device 10 returns to Step S22 and continues detection. If the user is taking screenshots, the sender device 10 retrieves the latest-taken screenshot (Step S24) and transmits the retrieved screenshot to the receiver device 20 (Step S26). Preferably, the sender device 10 encodes the retrieved screenshot before transmission to reduce the data volume (Step S25). Then, the receiver device 20 uses an external or built-in display module 30 to present the screenshot transmitted by the sender device 10 (Step S27).

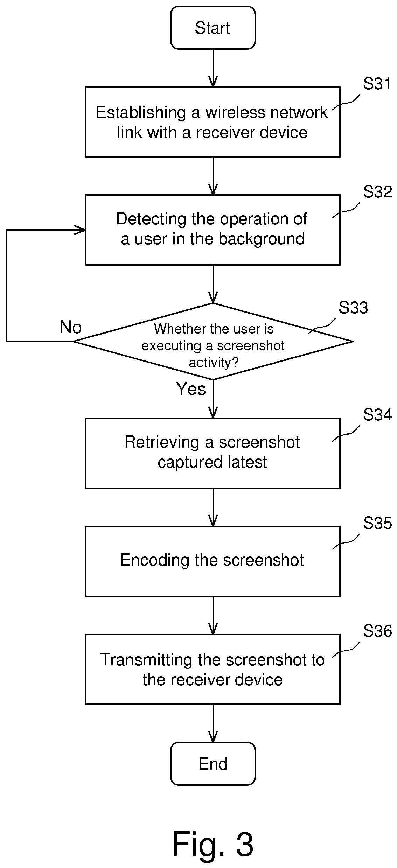

Below is described a method for transmitting screenshots according to one embodiment of the present invention. Refer to Fig.1 and Fig.3. The method for transmitting screenshots is applied to a sender device 10. Firstly, the sender device 10 establishes a wireless network link with a receiver device 20 (Step S31). Next, the sender device 10 detects the operations of the user in the background (Step S32) and identifies whether the user is taking screenshots (Step S33). If the user does not take any screenshot, the sender device 10 returns to Step S32 and continues detection. If the user is taking screenshots, the sender device 10 retrieves the latest-taken screenshot (Step S34) and transmits the retrieved screenshot to the receiver device 20 (Step S36). Preferably, the sender device 10 encodes the retrieved screenshot before transmission to reduce the data volume (Step S35).

The present invention also discloses a computer-readable medium. The computer-readable medium stores a computer program that can be loaded into a sender device to execute the method for transmitting screenshots shown in Fig.3, which has been described hereinbefore and will not repeat herein.

In conclusion, the present invention proposes a sender device and method for sharing screenshots and a computer-readable medium thereof, wherein the sender side detects whether the user is taking screenshots, wherein the sender side automatically retrieves the screenshot taken by the user latest and transmits it to the receiver side, whereby is simplified the operation of sharing screenshots. In the present invention, the sender side directly shares screenshots through point-to-point wireless network links without knowing the private information of the receiver sides, such as the telephone numbers or the email account. In the present invention, the user can share the screen frames of the operation of an application program, neither preparing screenshots beforehand nor switching programs repeatedly.

While the invention is susceptible to various modifications and alternative forms, a specific example thereof has been shown in the drawings and is herein described in detail. It should be understood, however, that the invention is not to be limited to the particular form disclosed, but to the contrary, the invention is to cover all modifications, equivalents, and alternatives falling within the appended claims.

## Claims

1. A mobile network device (10) for sharing screenshots, which cooperates with a receiver device (20) to form a screenshot sharing system, and which is **characterized by** comprising:
a detection module (11) configured for detecting in a background whether a user is executing a screenshot activity and outputting a corresponding trigger signal;
a control module (12) electrically connected with said detection module (11) and configured for retrieving a last taken screenshotaccording to said trigger signal; and
a wireless network interface (13) electrically connected with said control module (12) for establishing a wireless network link with said receiver device (20) and transmitting said screenshot to said receiver device (20).

2. The mobile network device (10) for sharing screenshots according to claim 1 further comprising an encoding module (14) electrically connected with said control module (12) and configured for encoding said screenshot.

3. The mobile network device (10) for sharing screenshots according to claim 1, wherein said receiver device (20) includes an external display module (30) or a built-in display module (30) for presenting said screenshot.

4. The mobile network device (10) for sharing screenshots according to claim 1, wherein said wireless network link works according to an IEEE 802.11-based communication standard.

5. A method for transmitting screenshots, which is applied to a mobile network device (10), and which is **characterized by** comprising steps:
establishing a wireless network link with a receiver device (20);
detecting in a background whether a user is executing a screenshot activity; if yes, retrieving a last taken screenshot; if no, continuing detection; and
transmitting said screenshot to said receiver device (20).

6. The method for transmitting screenshots according to claim 5 further comprising a step: encoding said screenshot.

7. The method for transmitting screenshots according to claim 5, wherein said wireless network link works according to an IEEE 802.11-based communication standard.

8. A computer-readable medium, which stores a computer program that is loaded into a mobile network device (10) to execute a method for transmitting screenshots **characterized by** comprising steps:
establishing a wireless network link with a receiver device (20);
detecting in a background whether a user is executing a screenshot activity; if yes, retrieving a last taken screenshot; if no, continuing detection; and
transmitting said screenshot to said receiver device (20).

9. The computer-readable medium according to claim 8, wherein said method further comprises a step: encoding said screenshot.

10. The computer-readable medium according to claim 8, wherein said wireless network link works according to an IEEE 802.11-based communication standard.

## Patentansprüche

1. Mobile Netzwerkvorrichtung (10) zum Teilen von Screenshots, die mit einer Empfangsvorrichtung (20) zusammenarbeitet, um ein Screenshot-Sharing-System auszubilden und das **dadurch gekennzeichnet ist, dass** es umfasst:
ein Erfassungsmodul (11), das konfiguriert ist, um im Hintergrund zu detektieren, ob ein Benutzer eine Screenshot-Aktivität ausführt und ein entsprechendes Triggersignal ausgibt,
ein Steuerungsmodul (12), das mit dem Erfassungsmodul (11) elektrisch verbunden ist und konfiguriert ist, um einen zuletzt aufgenommen Screenshot gemäß dem Triggersignal abzurufen, und
eine drahtlose Netzwerkschnittstelle (13), die mit dem Steuerungsmodul (12) elektrisch verbunden ist, um eine drahtlose Netzwerkverbindung mit der Empfangsvorrichtung (20) herzustellen und den Screenshot an die Empfangsvorrichtung (20) zu übertragen.

2. Mobile Netzwerkvorrichtung (10) zum Teilen von Screenshots nach Anspruch 1, ferner umfassend einem Codierungsmodul (14), das mit dem Steuerungsmodul (12) elektrisch verbunden ist und zum Codieren des Screenshots konfiguriert ist.

3. Mobile Netzwerkvorrichtung (10) zum Teilen von Screenshots nach Anspruch 1, wobei die Empfangsvorrichtung (20) ein externes Anzeigemodul (30) oder ein eingebautes Anzeigemodul (30) zum Darstellen des Screenshots aufweist.

4. Mobile Netzwerkvorrichtung (10) zum Teilen von Screenshots nach Anspruch 1, wobei die drahtlose Netzwerkverbindung gemäß einem IEEE 802.11-basierten Kommunikationsstandard arbeitet.

5. Verfahren zum Übertragen von Screenshots, das auf eine mobile Netzwerkvorrichtung (10) angewendet wird und das **dadurch gekennzeichnet ist, dass** es die Schritte umfasst:
Herstellen einer drahtlosen Netzwerkverbindung mit einer Empfangsvorrichtung (20),
im Hintergrund Erkennen, ob ein Benutzer eine Screenshot-Aktivität ausführt, wenn ja, Abrufen eines zuletzt aufgenommenen Screenshots, wenn nein, fortlaufende Erkennung; und
Übertragen des Screenshots an die Empfangsvorrichtung (20).

6. Verfahren zum Übertragen von Screenshots nach Anspruch 5, ferner umfassend einen Schritt: Codieren des Screenshots.

7. Verfahren zum Übertragen von Screenshots nach Anspruch 5, wobei die drahtlose Netzwerkverbindung gemäß einem IEEE 802.11-basierten Kommunikationsstandard arbeitet.

8. Ein computerlesbares Medium, das ein Computerprogramm speichert, das in ein Mobilfunkgerät (10) geladen ist, um ein Verfahren zum Übertragen von Screenshots auszuführen, das **dadurch gekennzeichnet ist, dass** es die Schritte umfasst:
Herstellen einer drahtlosen Netzwerkverbindung mit einer Empfangsvorrichtung (20),
Erkennen im Hintergrund, ob ein Benutzer eine Screenshot-Aktivität ausführt; wenn ja, einen zuletzt aufgenommenen Screenshot abrufen, wenn nein, fortlaufende Erkennung; und
Übertragen des Screenshots an die Empfangsvorrichtung (20).

9. Computerlesbares Medium nach Anspruch 8, wobei das Verfahren ferner einen Schritt umfasst: Codieren des Screenshots.

10. Computerlesbares Medium nach Anspruch 8, wobei die drahtlose Netzwerkverbindung gemäß einem IEEE 802.11-basierten Kommunikationsstandard arbeitet.

## Revendications

1. Dispositif de réseau mobile (10) destiné à partager des captures d'écran, qui coopère avec un dispositif récepteur (20) de façon à former un système de partage de captures d'écran, et qui est **caractérisé par le fait qu'**il comprend :
un module de détection (11) configuré de façon à détecter en arrière-plan si un utilisateur exécute une activité de capture d'écran, et à délivrer en sortie un signal de déclenchement correspondant ;
un module de commande (12) connecté de manière électrique audit module de détection (11), et configuré de façon à rechercher la dernière capture d'écran prise selon ledit signal de déclenchement ; et
une interface de réseau sans fil (13) connectée de manière électrique audit module de commande (12) de façon à établir une liaison de réseau sans fil avec ledit dispositif récepteur (20), et à transmettre ladite capture d'écran audit dispositif récepteur (20).

2. Dispositif de réseau mobile (10) destiné à partager des captures d'écran selon la revendication 1, comprenant en outre un module de codage (14) connecté de manière électrique audit module de commande (12), et configuré de façon à coder ladite capture d'écran.

3. Dispositif de réseau mobile (10) destiné à partager des captures d'écran selon la revendication 1, dans lequel ledit dispositif récepteur (20) comprend un module d'affichage extérieur (30) ou un module d'affichage intégré (30), destiné à présenter ladite capture d'écran.

4. Dispositif de réseau mobile (10) destiné à partager des captures d'écran selon la revendication 1, dans lequel ladite liaison de réseau sans fil fonctionne selon une norme de communication basée sur IEEE 802.11.

5. Procédé destiné à transmettre des captures d'écran, qui est appliqué à un dispositif de réseau mobile (10), et qui est **caractérisé par** les étapes consistant à :
établir une liaison de réseau sans fil avec un dispositif récepteur (20) ;
détecter en arrière-plan si un utilisateur exécute une activité de capture d'écran ;
si la réponse est oui, rechercher la dernière capture d'écran prise ;
si la réponse est non, poursuivre la détection ; et
transmettre ladite capture d'écran audit dispositif récepteur (20).

6. Procédé destiné à transmettre des captures d'écran selon la revendication 5, comprenant en outre une étape consistant à :
coder ladite capture d'écran.

7. Procédé destiné à transmettre des captures d'écran selon la revendication 5, dans lequel ladite liaison de réseau sans fil fonctionne selon une norme de communication basée sur IEEE 802.11.

8. Support pouvant être lu par un ordinateur, dans lequel est stocké un programme informatique qui est chargé dans un dispositif de réseau mobile (10) de façon à exécuter un procédé destiné à transmettre des captures d'écran, **caractérisé par le fait qu'**il comprend les étapes consistant à :
établir une liaison de réseau sans fil avec un dispositif récepteur (20) ;
détecter en arrière-plan si un utilisateur exécute une activité de capture d'écran ;
si la réponse est oui, rechercher la dernière capture d'écran prise ;
si la réponse est non, poursuivre la détection ; et
transmettre ladite capture d'écran audit dispositif récepteur (20).

9. Support pouvant être lu par un ordinateur selon la revendication 8, dans lequel ledit procédé comprend en outre une étape consistant à :
coder ladite capture d'écran.

10. Support pouvant être lu par un ordinateur selon la revendication 8, dans lequel ladite liaison de réseau sans fil fonctionne selon une norme de communication basée sur IEEE 802.11.
